# FASCICULE DE BREVET EUROPEEN

(11) **EP 1 593 813 B1**
(45) Date de publication et mention de la délivrance du brevet: **19.08.2015**
(21) Numéro de dépôt: 05290894.4
(22) Date de dépôt: 22.04.2005
(51) Int. Cl.: F01D 9/04, F01D 25/24, F01D 25/12

(54) **Dispositif de refroidissement pour anneau fixe de turbine à gaz**
Kühlvorrichtung für einen fixierten Abdeckring in einer Gasturbine
Cooling device for a gas turbine fixed shroud

(30) Priorité: 04.05.2004 FR 0404739
(43) Date de publication de la demande: 09.11.2005
(73) Titulaire: SNECMA, 75015 Paris (FR)
(72) Inventeur: Amiot, Denis, 77190 Dammarie Les Lys (FR); Lefebvre, Pascal, 77870 Vulaines sur Seine (FR)
(74) Mandataire: Boura, Olivier

(56) Documents cités:
- EP-A- 0 709 550
- FR-A- 2 407 342
- US-A- 4 573 866
- US-A- 5 197 853

## Description

### Arrière-plan de l'invention

La présente invention se rapporte au domaine général des dispositifs de refroidissement des anneaux fixes entourant des passages de gaz chauds de turbines à gaz. Elle vise plus particulièrement un dispositif de refroidissement permettant de canaliser et d'utiliser l'air provenant de fuites d'étanchéité au niveau des attaches entre les segments d'anneau formant l'anneau et leurs supports.

Dans une turbine à gaz, par exemple une turbine haute-pression de turbomachine, les aubes mobiles sont entourées sur toute la circonférence d'un logement fixe formant carter par un anneau fixe. Cet anneau est généralement sectorisé, c'est à dire qu'il se compose d'une pluralité de segments d'anneau mis bout à bout, et définit en partie le passage pour les gaz chauds issus de la chambre de combustion de la turbomachine et traversant la turbine.

Les segments d'anneau sont fixés sur le carter par l'intermédiaire d'une entretoise fixe formant support qui est également sectorisée en une pluralité de segments d'entretoises. Plus particulièrement, les segments d'anneau sont fixés sur les secteurs d'entretoise par l'intermédiaire de systèmes d'attaches amont et aval. Par ailleurs, les segments d'anneau et d'entretoise sont disposés les uns par rapport aux autres de façon à former une cavité annulaire dite « d'impact » qui est délimitée radialement entre des parois annulaires axiales des segments d'entretoise et d'anneau.

Il est connu de munir de tels segments d'anneau de dispositifs de refroidissement leur permettant de supporter les températures élevées des gaz chauds avec lesquels ils sont en contact. L'une des méthodes pour refroidir les segments d'anneau consiste à pratiquer un orifice d'alimentation en air de refroidissement dans les segments d'entretoise de façon à alimenter en air la cavité d'impact formée entre les segments d'anneau et d'entretoise, et à ménager dans des parois des segments d'anneau une pluralité de trous d'émission d'air s'ouvrant dans cette cavité et débouchant dans le passage des gaz chauds. Une plaque d'impact peut également être disposée dans la cavité d'impact entre l'orifice d'alimentation en air et les trous d'émission d'air des segments d'anneau. Compte-tenu de la différence de pression de chaque côté de la plaque d'impact, l'air traverse celle-ci, impacte sur les parois de segments d'anneau à refroidir et est évacué par les trous d'émission percés dans ces mêmes parois.

Un tel arrangement permet généralement d'obtenir un refroidissement efficace des segments d'anneau. Cependant, compte-tenu de la forte différence de pression de l'air entre la cavité d'impact et le passage des gaz chauds, des fuites d'air apparaissent au niveau des systèmes d'attaches des segments d'anneau sur les segments d'entretoise. Ces fuites résultent d'une mauvaise étanchéité de ces systèmes d'attaches. Dans la pratique, l'air provenant de ces fuites s'écoule tangentiellement le long d'un segment d'anneau et est évacué dans le passage de gaz chauds au niveau de la zone de raccord entre deux segments d'anneau adjacents. Cet air, qui peut représenter en quantité jusqu'à 0,2% du débit total d'air de refroidissement, ne participe donc pas au refroidissement des segments d'anneau. Cela représente une quantité non négligeable d'air qui n'est pas utilisée et qui aurait pu être.affectée au refroidissement d'autres secteurs de la turbomachine. L'invention décrite dans le document US 5,197,853 vise à éviter de telles fuites d'air.

### Objet et résumé de l'invention

La présente invention a donc pour but principal de pallier de tels inconvénients en proposant un dispositif de refroidissement qui permet de faire participer l'air provenant des fuites au refroidissement des segments d'anneau.

A cet effet, il est prévu un dispositif de refroidissement selon la revendication 1.

De la sorte, l'air provenant des fuites au niveau des systèmes d'attache n'est pas inutilement gaspillé et travaille bien au refroidissement des segments d'anneau. Dans la pratique, il permet d'abaisser la température de certaines zones des segments d'anneau jusqu'à 20°C environ.

Un tel circuit amont peut comporter au moins une section axiale de passage d'air s'ouvrant dans un espace circonférentiel amont délimité radialement entre le crochet amont interne et une paroi axiale d'un segment d'entretoise et débouchant au niveau de l'encoche amont d'un segment d'anneau fixé sur le segment d'entretoise.

De préférence, le circuit amont comporte une pluralité de sections axiales de passage d'air régulièrement espacées les unes des autres dans le sens circonférentiel. Les sections de passage d'air peuvent être pratiquées dans le crochet amont externe du segment d'anneau et/ou dans le crochet amont interne du segment d'entretoise.

De façon particulière, le dispositif comporte avantageusement un circuit aval pour canaliser de l'air provenant de fuites d'étanchéité au niveau de chaque système d'attache aval et le diriger vers le becquet aval des segments d'anneau afin de le refroidir.

Un tel circuit aval peut comporter au moins une section axiale de passage d'air s'ouvrant dans un espace circonférentiel aval délimité radialement entre les crochets aval externes respectifs des segments d'anneau et d'entretoise et débouchant au niveau de l'encoche aval du segment d'anneau.

De préférence, le circuit aval comporte une pluralité de sections axiales de passage d'air régulièrement espacées les unes des autres dans le sens circonférentiel. Les sections de passage d'air peuvent être pratiquées dans le crochet aval externe du segment d'anneau et/ou dans une branche interne de la pince de serrage.

La présente invention a également pour objet un anneau fixe entourant un passage de gaz chauds d'une turbine à gaz et comportant un dispositif de refroidissement tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe longitudinale d'un dispositif de refroidissement selon un mode de réalisation de l'invention ;
- la figure 2 est une vue en perspective d'un segment d'anneau équipé du dispositif de refroidissement de la figure 1 ; et
- la figure 3 est une vue en coupe longitudinale d'un dispositif de refroidissement selon un autre mode de réalisation de l'invention.

### Description détaillée d'un mode de réalisation

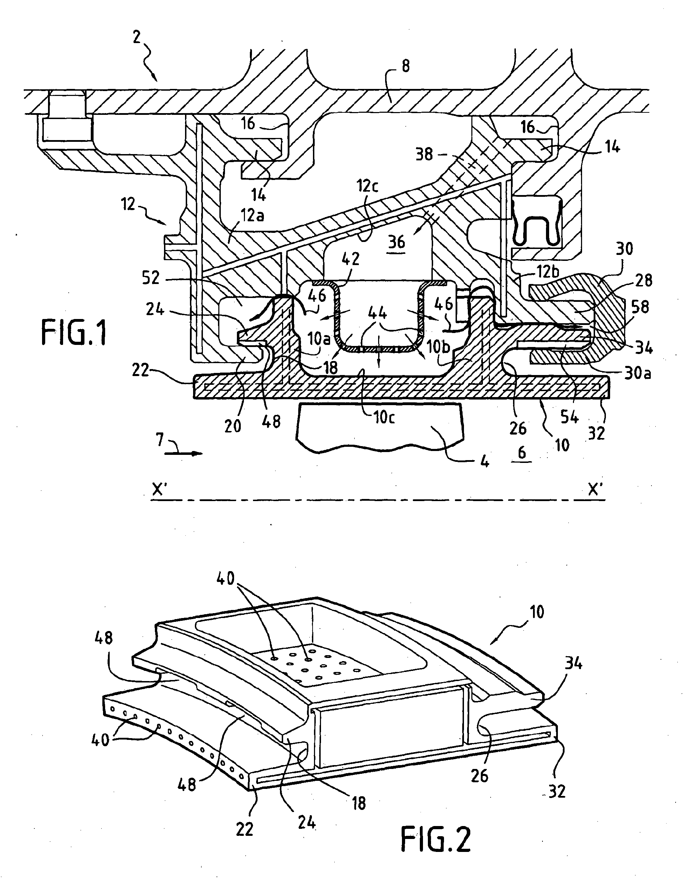

En liaison avec la figure 1, une turbine haute-pression 2 de turbomachine comporte une pluralité d'aubes mobiles 4 disposées dans un passage 6 pour les gaz chauds issus de la chambre de combustion (non représentée) et s'écoulant selon la direction indiquée par la flèche 7. Ces aubes 4 sont entourées par un anneau fixe sur toute la circonférence d'un logement annulaire fixe d'axe XX' formant un carter 8 de la turbomachine.

L'anneau fixe est sectorisé, c'est à dire qu'il se compose d'une pluralité de segments d'anneau 10 mis bout à bout de façon à former une surface circulaire continue entourant en partie le passage 6 pour les gaz chauds.

Les segments d'anneau 10 sont fixés sur le carter 8 par l'intermédiaire d'une entretoise fixe formant support qui est également sectorisée en une pluralité de segments d'entretoises 12. Chaque segment d'entretoise 12 est monté sur le carter 8 par l'intermédiaire de crochets 14 engagés axialement dans des encoches 16 pratiquées dans le carter 8. Chaque segment d'anneau 10 est monté sur un segment d'entretoise 12 par l'intermédiaire de systèmes d'attaches amont et aval.

Plus particulièrement, chaque système d'attache amont se compose d'une encoche amont 18 pratiquée dans la paroi radiale amont 10a d'un segment d'anneau 10 et d'un crochet amont interne 20 formé dans une paroi radiale amont 12a du segment d'entretoise 12 sur lequel est fixé le segment d'anneau.

L'encoche amont 18 du segment d'anneau 10 est délimitée radialement entre un becquet amont 22 et un crochet amont externe 24 qui font saillies axialement par rapport à la paroi radiale amont 10a du segment d'anneau, le becquet amont 22 étant en contact direct avec les gaz chauds s'écoulant dans le passage 6. Quant au crochet amont interne 20 du segment d'entretoise 12, il est engagé axialement avec cette encoche amont 18 ainsi définie.

Chaque système d'attache aval se compose d'une encoche aval 26 pratiquée dans la paroi radiale aval 10b d'un segment d'anneau 10, d'un crochet aval externe 28 d'une paroi aval 12b d'un segment d'entretoise 12 sur lequel est fixé le segment d'anneau, et d'une pince de serrage 30.

L'encoche aval 26 du segment d'anneau 10 est délimitée radialement entre un becquet aval 32 et un crochet aval externe 34 qui font saillies axialement par rapport à la paroi radiale aval 10b du segment d'anneau, le becquet aval 32 étant en contact direct avec les gaz chauds s'écoulant dans le passage 6. Le crochet aval externe 28 du segment d'entretoise 12 est en appui radial contre le crochet aval externe 34 du segment d'anneau 10.

Quant à la pince de serrage 30, de type clip en C, elle entoure les crochets aval externes 34, 28 respectifs des segments d'anneau 10 et d'entretoise 12 et maintient ainsi ces crochets en appui radial l'un contre l'autre.

Les segments d'anneau 10 et d'entretoise 12 sont par ailleurs disposés les uns par rapport aux autres de façon à définir au moins une cavité annulaire 36 dite « d'impact » destinée au refroidissement des segments d'anneau 10. Cette cavité d'impact 36 est délimitée radialement entre une paroi annulaire axiale 12c des segments d'entretoise 12 et une paroi annulaire axiale 10c des segments d'anneau 10.

Les segments d'entretoise 12 comportent par ailleurs au moins un orifice d'alimentation en air de refroidissement 38 qui débouche dans la cavité d'impact 36 afin d'alimenter celle-ci en air de refroidissement. Cet air de refroidissement peut provenir de l'air de contournement de la chambre de combustion de la turbomachine.

Les segments d'anneau 10 sont quant à eux pourvus de parois percées d'une pluralité de trous d'émission d'air 40 s'ouvrant dans la cavité d'impact 36 et débouchant dans le passage 6 des gaz chauds (figure 2). Plus précisément, ces trous d'émission d'air 40 débouchent dans le passage 6 au niveau du becquet amont 22 des segments d'anneau 10 (qui est la zone la plus chaude) et sont inclinés par rapport aux directions axiale et radiale de façon à augmenter la surface d'échange par pompage thermique.

Une plaque d'impact 42 à section en U dans le fond de laquelle sont pratiqués une pluralité de perçages 44 est également disposée dans la cavité d'impact 36, entre l'orifice d'alimentation en air 38 et les trous d'émission d'air 40. Compte-tenu de la différence de pression de chaque côté de la plaque d'impact 42, l'air traverse celle-ci par les perçages 44, impacte sur les parois de segments d'anneau 10 à refroidir et est évacué au niveau de leur becquet amont 22 par les trous d'émission d'air 40.

Des fuites d'air apparaissent au niveau des systèmes d'attaches amont et aval. Plus précisément, compte-tenu de la différence de pression entre la cavité d'impact 36 et le passage 6 des gaz chauds, l'air de refroidissement alimentant la cavité 36 a tendance à fuir au niveau des attaches amont et aval en empruntant le trajet représenté par les flèches 46 de la figure 1. L'air est en général évacué dans le passage 6 des gaz chauds au niveau de la zone de raccord entre deux segments d'anneau 10 adjacents. Les fuites sont par ailleurs plus importantes au niveau des systèmes d'attache amont que des systèmes aval.

Selon l'invention, plutôt que d'essayer de réduire ces fuites d'étanchéité au niveau des systèmes d'attache amont et aval, il est prévu des moyens pour canaliser l'air provenant de ces fuites et pour diriger cet air vers au moins l'une des extrémités axiales des segments d'anneau 10 en contact avec les gaz chauds afin de la refroidir.

Plus particulièrement, pour canaliser les fuites d'air au niveau des systèmes d'attache amont, il est prévu un circuit amont comportant au moins une section axiale de passage d'air 48, 50 s'ouvrant dans un espace circonférentiel amont 52 délimité radialement entre le crochet amont interne 20 et la paroi axiale 12c d'un segment d'entretoise 12 et débouchant au niveau de l'encoche amont 18 d'un segment d'anneau 10 fixé sur ce segment d'entretoise.

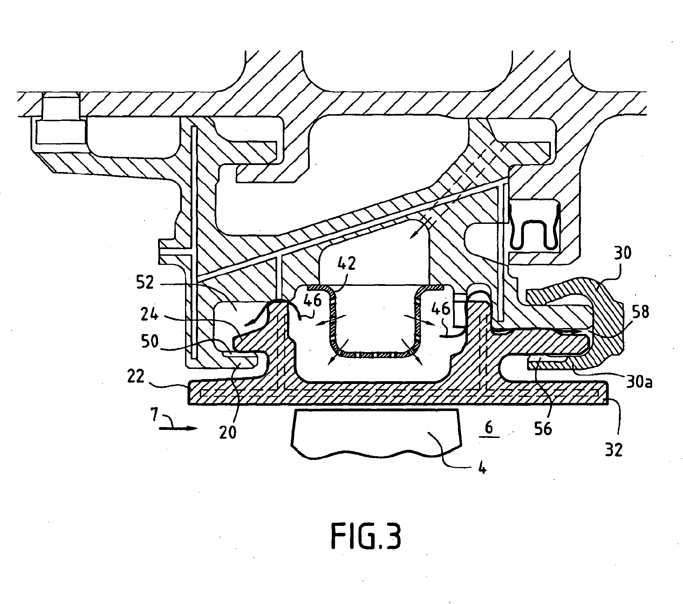

Comme illustré sur les figures 1 et 2, la ou les sections de passage d'air 48 d'un tel circuit amont peuvent être pratiquées dans le crochet amont externe 24 des segments d'anneau 10. Alternativement, la ou les sections de passage d'air 50 du circuit amont peuvent être réalisées dans le crochet amont interne 20 des segments d'entretoise 12 (figure 3).

Selon encore une autre alternative non représentée sur les figures, des sections de passage d'air du circuit amont sont réalisées à la fois dans le crochet amont externe 24 des segments d'anneau 10 et dans le crochet amont interne 20 des segments d'entretoise 12.

L'air provenant de la cavité d'impact 36 et qui a tendance à fuir par les systèmes d'attaches amont est ainsi canalisé dans l'espace circonférentiel amont 52 puis dirigé vers l'encoche amont 18 des segments d'anneau 10 en empruntant la ou les sections de passage d'air 48, 50 avant d'être évacué dans le passage 6 des gaz chauds. De la sorte, cet air permet de refroidir par convection le becquet amont 22 des segments d'anneau 10 qui est une zone particulièrement exposée aux gaz chauds et difficile à refroidir.

Plus précisément, avec un débit représentant 0,2% environ du débit total de l'air de refroidissement des segments d'anneau 10, cet air issu des fuites au niveau des attaches amont permet d'abaisser la température de la face du becquet amont 22 en contact avec les gaz chauds jusqu'à 10°C et la température de la face supérieure du becquet jusqu'à 20°C.

De préférence, le circuit amont comporte une pluralité de sections axiales de passage d'air 48, 50 qui sont régulièrement espacées les unes des autres dans le sens circonférentiel. Elles peuvent être de nombre et de forme variable.

Pour canaliser les fuites d'air au niveau des systèmes d'attache aval, il est prévu un circuit aval comportant au moins une section axiale de passage d'air 54, 56 s'ouvrant dans un espace circonférentiel aval 58 délimité radialement entre les crochets aval externes 34, 28 respectifs des segments d'anneau 10 et d'entretoise 12 et débouchant au niveau de l'encoche aval 26 du segment d'anneau.

La ou les sections de passage d'air 54 de ce circuit aval peuvent être pratiquées dans le crochet aval externe 34 du segment d'anneau 10 (figure 1). Alternativement, la ou les sections de passage d'air 56 peuvent être réalisées dans une branche interne 30a de la pince de serrage 30 (figure 3).

Selon encore une autre alternative non représentée sur les figures, des sections de passage d'air du circuit aval sont réalisées à la fois dans le crochet aval externe 34 du segment d'anneau 10 et dans le branche interne 30a de la pince de serrage 30.

De préférence, le circuit aval comporte une pluralité de sections axiales de passage d'air 54, 56 qui sont régulièrement espacées les unes des autres dans le sens circonférentiel. Elles peuvent être de nombre et de forme variable.

Ainsi, l'air provenant de la cavité d'impact 36 et qui a tendance à fuir par les systèmes d'attaches aval est canalisé dans l'espace circonférentiel aval 58 puis dirigé vers l'encoche aval 26 des segments d'anneau 10 en empruntant la ou les sections de passage d'air 54, 56 avant d'être évacué dans le passage 6 des gaz chauds. De la sorte, cet air permet de refroidir par convection le becquet aval 32 des segments d'anneau 10 qui est une zone particulièrement difficile à refroidir.

## Revendications

1. Dispositif de refroidissement pour un anneau fixe entourant un passage de gaz chauds (6) d'une turbine à gaz, ledit anneau étant composé d'une pluralité de segments d'anneau (10) qui sont fixés par des systèmes d'attaches amont et aval sur une pluralité de segments d'entretoise (12) formant une entretoise annulaire fixe de support entourant ledit anneau de façon à définir avec celui-ci au moins une cavité annulaire d'impact (36) dans laquelle débouche au moins un orifice d'alimentation en air de refroidissement (38), chaque segment d'anneau (10) ayant des parois percées d'une pluralité de trous d'émission d'air (40) s'ouvrant dans la cavité d'impact (36) et débouchant dans le passage des gaz chauds (6), chaque système d'attache amont comportant:
une encoche amont (18) d'un segment d'anneau (10) délimitée radialement entre un becquet amont (22) en contact avec les gaz chauds et un crochet amont externe (24), et
un crochet amont interne (20) d'un segment d'entretoise (12) sur lequel est fixé le segment d'anneau (10), ledit crochet amont interne (20) étant engagé axialement avec ladite encoche amont (18) du segment d'anneau,
**caractérisé en ce que** le dispositif comporte un circuit amont (48, 50) pour canaliser de l'air provenant de fuites d'étanchéité au niveau de chaque système d'attache amont et le diriger vers le becquet amont (22) des segments d'anneau afin de les refroidir.

2. Dispositif selon la revendication 1, **caractérisé en ce que** le circuit amont comporte au moins une section axiale de passage d'air (48, 50) s'ouvrant dans un espace circonférentiel amont (52) délimité radialement entre le crochet amont interne (20) et une paroi axiale (12c) d'un segment d'entretoise (12) et débouchant au niveau de l'encoche amont (18) d'un segment d'anneau (10) fixé sur ledit segment d'entretoise.

3. Dispositif selon la revendication 2, **caractérisé en ce que** le circuit amont comporte une pluralité de sections axiales de passage d'air (48, 50) régulièrement espacées les unes des autres dans le sens circonférentiel.

4. Dispositif selon l'une des revendications 2 et 3, **caractérisé en ce que** les sections de passage d'air (48) sont pratiquées dans le crochet amont externe (24) du segment d'anneau (10).

5. Dispositif selon l'une des revendications 2 et 3, **caractérisé en ce que** les sections de passage d'air (50) sont pratiquées dans le crochet amont interne (20) du segment d'entretoise (12).

6. Dispositif selon l'une quelconque des revendications 1 à 5, dans lequel chaque système d'attache aval comporte :
une encoche aval (26) d'un segment d'anneau (10) délimitée radialement entre un becquet aval (32) en contact avec les gaz chauds et un crochet aval externe (34),
un crochet aval externe (28) d'un segment d'entretoise (12) sur lequel est fixé le segment d'anneau (10), ledit crochet aval externe (28) du segment d'entretoise étant en appui radial contre ledit crochet aval externe (34) du segment d'anneau, et
une pince de serrage (30) entourant les crochets aval externes (28, 34) des segments d'entretoise (12) et d'anneau (10),
**caractérisé en ce que** le dispositif comporte un circuit aval (54, 56) pour canaliser de l'air provenant de fuites d'étanchéité au niveau de chaque système d'attache aval et le diriger vers le becquet aval (32) des segments d'anneau afin de les refroidir.

7. Dispositif selon la revendication 6, **caractérisé en ce que** le circuit aval comporte au moins une section axiale de passage d'air (54, 56) s'ouvrant dans un espace circonférentiel aval (58) délimité radialement entre les crochets aval externes (34, 28) respectifs des segments d'anneau (10) et d'entretoise (12) et débouchant au niveau de l'encoche aval (26) du segment d'anneau.

8. Dispositif selon la revendication 7, **caractérisé en ce que** le circuit aval comporte une pluralité de sections axiales de passage d'air (54, 56) régulièrement espacées les unes des autres dans le sens circonférentiel.

9. Dispositif selon l'une des revendications 7 et 8, **caractérisé en ce que** les sections de passage d'air (54) sont pratiquées dans le crochet aval externe (34) du segment d'anneau (10).

10. Dispositif selon l'une des revendications 7 et 8, **caractérisé en ce que** les sections de passage d'air (56) sont pratiquées dans une branche interne (30a) de la pince de serrage (30).

11. Anneau fixe entourant un passage de gaz chauds d'une turbine à gaz, **caractérisé en ce qu'**il comporte un dispositif de refroidissement selon l'une quelconque des revendications 1 à 10.

## Patentansprüche

1. Kühlvorrichtung für einen festen Ring, der einen Heißgasdurchlass (6) einer Gasturbine umgibt, wobei der Ring von einer Vielzahl von Ringsegmenten (10) gebildet ist, die durch stromaufwärtige und stromabwärtige Befestigungssysteme an einer Vielzahl von Stegsegmenten (12) befestigt sind, die einen festen ringförmigen Tragesteg bilden, welcher den Ring umgibt, um mit diesem wenigstens einen ringförmigen Auftreffhohlraum (36) zu definieren, in den wenigstens eine Kühlluftzuführöffnung (38) mündet, wobei jedes Ringsegment (10) Wände aufweist, die von einer Vielzahl von Luftausströmlöchern (40), welche sich in den Auftreffhohlraum (36) öffnen und in den Heißgasdurchlass (6) münden, durchbohrt sind, wobei jedes stromaufwärtige Befestigungssystem umfasst:
eine stromaufwärtige Auskerbung (18) eines Ringsegments (10), die zwischen einem stromaufwärtigen Flügel (22), der mit den heißen Gasen in Kontakt ist, und einem stromaufwärtigen Außenhaken (24) radial begrenzt ist, und
einen stromaufwärtigen Innenhaken (20) eines Stegsegments (12), an dem das Ringsegment (10) befestigt ist, wobei der stromaufwärtige Innenhaken (20) mit der stromaufwärtigen Auskerbung (18) des Ringsegments axial gesteckt ist,
**dadurch gekennzeichnet, dass** die Vorrichtung einen stromaufwärtigen Kreis (48, 50) umfasst, um Luft, die aus Dichtigkeitslecks im Bereich eines jeden stromaufwärtigen Befestigungssystems stammt, zu kanalisieren und um sie in Richtung des stromaufwärtigen Flügels (22) der Ringsegmente zu leiten, um sie zu kühlen.

2. Vorrichtung nach Anspruch 1, **dadurch gekennzeichnet, dass** der stromaufwärtige Kreis wenigstens einen axialen Luftdurchgangsabschnitt (48, 50) umfasst, der sich in einen stromaufwärtigen Umfangsraum (52), welcher zwischen dem stromaufwärtigen Innenhaken (20) und einer axialen Wand (12c) eines Stegsegments (12) radial begrenzt ist, öffnet und im Bereich der stromaufwärtigen Auskerbung (18) eines an dem Stegsegment befestigten Ringsegments (10) ausmündet.

3. Vorrichtung nach Anspruch 2, **dadurch gekennzeichnet, dass** der stromaufwärtige Kreis eine Vielzahl von axialen Luftdurchgangsabschnitten (48, 50), die in Umfangsrichtung gleichmäßig voneinander beabstandet sind, umfasst.

4. Vorrichtung nach einem der Ansprüche 2 und 3, **dadurch gekennzeichnet, dass** die Luftdurchgangsabschnitte (48) in dem stromaufwärtigen Außenhaken (24) des Ringsegments (10) ausgebildet sind.

5. Vorrichtung nach einem der Ansprüche 2 und 3, **dadurch gekennzeichnet, dass** die Luftdurchgangsabschnitte (50) in dem stromaufwärtigen Innenhaken (20) des Stegsegments (12) ausgebildet sind.

6. Vorrichtung nach einem der Ansprüche 1 bis 5, wobei jedes stromabwärtige Befestigungssystem umfasst:
eine stromabwärtige Auskerbung (26) eines Ringsegments (10), die zwischen einem stromabwärtigen Flügel (32), der mit den heißen Gasen in Kontakt ist, und einem stromabwärtigen Außenhaken (34) radial begrenzt ist,
einen stromabwärtigen Außenhaken (28) eines Stegsegments (12), an dem das Ringsegment (10) befestigt ist, wobei der stromabwärtige Außenhaken (28) des Stegsegments an dem stromabwärtigen Außenhaken (34) des Ringsegments in radialer Anlage ist, und
eine Spannzange (30), welche die stromabwärtigen Außenhaken (28, 34) der Stegsemente (12) und Ringsegmente (10) umgibt,
**dadurch gekennzeichnet, dass** die Vorrichtung einen stromabwärtigen Kreis (54, 56) umfasst, um Luft, die aus Dichtigkeitslecks im Bereich eines jeden stromabwärtigen Befestigungssystems stammt, zu kanalisieren und um sie in Richtung des stromabwärtigen Flügels (32) der Ringsegmente zu leiten, um sie zu kühlen.

7. Vorrichtung nach Anspruch 6, **dadurch gekennzeichnet, dass** der stromabwärtige Kreis wenigstens einen axialen Luftdurchgangsabschnitt (54, 56) umfasst, der sich in einen stromabwärtigen Umfangsraum (58), welcher zwischen den jeweiligen stromabwärtigen Außenhaken (34, 28) der Ringsegmente (10) und Stegsegmente (12) radial begrenzt ist, öffnet und im Bereich der stromabwärtigen Auskerbung (26) des Ringsegments ausmündet.

8. Vorrichtung nach Anspruch 7, **dadurch gekennzeichnet, dass** der stromabwärtige Kreis eine Vielzahl von axialen Luftdurchgangsabschnitten (54, 56), die in Umfangsrichtung gleichmäßig voneinander beabstandet sind, umfasst.

9. Vorrichtung nach einem der Ansprüche 7 und 8, **dadurch gekennzeichnet, dass** die Luftdurchgangsabschnitte (54) in dem stromabwärtigen Außenhaken (34) des Ringsegments (10) ausgebildet sind.

10. Vorrichtung nach einem der Ansprüche 7 und 8, **dadurch gekennzeichnet, dass** die Luftdurchgangsabschnitte (56) in einem Innenschenkel (30a) der Spannzange (30) ausgebildet sind.

11. Fester Ring, der einen Heißgasdurchlass einer Gasturbine umgibt, **dadurch gekennzeichnet, dass** er eine Kühlvorrichtung nach einem der Ansprüche 1 bis 10 umfasst.

## Claims

1. A cooling device for a stationary ring surrounding a gas-turbine hot-gas flow path (6), said ring being made up of a plurality of ring segments (10) that are fastened by upstream and downstream fastener systems onto a plurality of spacer segments (12) forming a stationary annular support spacer surrounding said ring so as to co-operate therewith to define at least one annular impact cavity (36) into which at least one cooling-air supply orifice (38) opens out, each ring segment (10) having walls that are pierced with a plurality of air exhaust holes (40) opening out both into the impact cavity (36), and into the hot-gas flow path (6), each upstream fastener system comprising:
an upstream notch (18) of a ring segment (10) that is radially defined between an upstream tip (22) in contact with the hot gas, and an outer upstream hook (24); and
an inner upstream hook (20) of a spacer segment (12) onto which the ring segment (10) is fastened, said inner upstream hook (20) being axially engaged in said upstream notch (18) of the ring segment,
**characterized in that** the device includes an upstream circuit (48, 50) for channeling the air coming from leakage through the seals of each upstream fastener system, and for directing it towards the upstream tips (22) of the ring segments so as to cool them.

2. A device according to claim 1, **characterized in that** the upstream circuit comprises at least one axial air flow path (48, 50) opening out both into an upstream circumferential space (52) that is radially defined between the inner upstream hooks (20) and the axial walls (12c) of the spacer segments (12), and into the upstream notches (18) of the ring segments (10) that are fastened onto said spacer segments.

3. A device according to claim 2, **characterized in that** the upstream circuit comprises a plurality of axial air flow paths (18, 50) that are evenly spaced apart around its circumference.

4. A device according to any one of claims 2 and 3, **characterized in that** the air flow paths (48) are formed in the outer upstream hooks (24) of the ring segments (10).

5. A device according to any one of claims 2 and 3, **characterized in that** the air flow paths (50) are formed in the inner upstream hooks (20) of the spacer segments (12).

6. A device according to any one of claims 1 to 5, in which each downstream fastener system comprises:
a downstream notch (26) of a ring segment (10) that is radially defined between a downstream tip (32) in contact with the hot gas, and an outer downstream hook (34);
an outer downstream hook (28) of a spacer segment (12) onto which the ring segment (10) is fastened, said outer downstream hook (28) of the spacer segment bearing radially against said outer downstream hook (34) of the ring segment; and
a clip (30) surrounding the outer downstream hooks (28, 34) of the spacer (12) and ring (10) segments;
**characterized in that** the device includes a downstream circuit (54, 56) for channeling the air coming from leakage through the seals of the downstream fastener systems, and for directing it towards the downstream tips (32) of the ring segments so as to cool them.

7. A device according to claim 6, **characterized in that** the downstream circuit comprises at least one axial air flow path (54, 56) opening out both into a downstream circumferential space (58) that is radially defined between the outer downstream hooks (34, 28) of the ring and spacer segments, and into the downstream notches (26) of the ring segments.

8. A device according to claim 7, **characterized in that** the downstream circuit comprises a plurality of axial air flow paths (54, 56) that are evenly spaced apart around its circumference.

9. A device according to any one of claims 7 and 8, **characterized in that** the air flow paths (54) are formed in the outer downstream hooks (34) of the ring segments (10).

10. A device according to any one of claims 7 and 8, **characterized in that** the air flow paths (56) are formed in the inner branches (30a) of the clips (30).

11. A stationary ring surrounding a gas-turbine hot-gas flow path, **characterized in that** it includes a cooling device according to any one of claims 1 to 10.
